# EUROPEAN PATENT APPLICATION

(11) **EP 2 505 610 A1**
(43) Date of publication of application: **03.10.2012**
(21) Application number: 10833021.8
(22) Date of filing: 27.10.2010
(51) Int. Cl.: C08L 63/00, C08G 59/40, C08K 3/00, C09J 11/04, C09J 11/06, C09J 163/00, C09K 3/10

(54) **SINGLE-COMPONENT EPOXY RESIN COMPOSITION AND USE THEREOF**

(30) Priority: 27.11.2009 JP 2009270782
(71) Applicant: Omron Corporation, Kyoto-shi, Kyoto 600-8530 (JP)
(72) Inventor: OHTANI, Osamu, Shiokoji-dori, Shimogyo-ku, Kyoto-shi Kyoto 600-8530 (JP); FUKUHARA, Tomohiro, Shiokoji-dori, Shimogyo-ku, Kyoto-shi Kyoto 600-8530 (JP); NAKAJIMA, Seiji, Shiokoji-dori, Shimogyo-ku, Kyoto-shi Kyoto 600-8530 (JP)
(74) Representative: Wilhelms · Kilian & Partner Patentanwälte
(86) International application number: PCT/JP2010/069028
(87) International publication number: WO 2011/065174

(57) **Abstract**

An epoxy resin composition in accordance with the present invention is a one-part epoxy resin composition for hermetic sealing of an electronic component or an electrical component, containing: a liquid epoxy resin; dicyandiamide; and a filler, the filler having an average particle size between 0.1 µm and 1 µm, the filler containing particles not less than 5 µm in particle size in an amount of not more than 20 wt%, and the amount of the filler contained in the one-part epoxy resin composition being between 5 and 60 parts by weight relative to 100 parts by weight of the liquid epoxy resin. This achieves a one-part liquid epoxy resin composition in which a great variety of curing agents can be used and dissociation of an epoxy resin and a curing agent is suppressed even when used in a gap of approximately several tens of micrometers.

## Description

### Technical Field

The present invention relates to a single-component epoxy resin composition (hereinafter referred to as a one-part epoxy resin composition) and the use thereof.

### Background Art

Since miniature control electronic components are strongly required to have solder heat resistance and hermeticity when being mounted, a sealing material is necessary for the miniature control electronic components. An example of such a sealing material commonly used is an epoxy resin composition.

Out of epoxy resin compositions, a one-part epoxy resin composition to which a latent curing agent has been contained in advance is used because of its good handleability and excellent storage stability.

Such an epoxy resin composition is disclosed in for example Patent Literature 1. Patent Literature 1 discloses a one-part epoxy resin composition that hermetically or insulatively seals a miniature electronic component or a miniature electrical component, which epoxy resin composition (i) contains as essential constituents an epoxy resin and a curing agent (other than dicyandiamide) and (ii) is constituted partially by a fully aromatic polyester resin.

Patent Literature 1 states that the configuration makes it possible to achieve a one-part liquid epoxy resin composition that provides excellent hermeticity, in particular has excellent adhesion to an LCP and a metal terminal even at high temperatures during a solder reflow process, in a relay that is partially constituted by the LCP.

Further, there is disclosed a one-part epoxy resin composition that hermetically or insulatively seals a miniature electronic component or a miniature electrical component, which epoxy resin composition contains, in predetermined proportions, an epoxy resin, dicyandiamide, a dihydrazide compound, and a latent curing agent other than the dicyandiamide and dihydrazide compound (for example, refer to Patent Literature 2).

Patent Literature 2 states that the composition makes it possible to achieve a one-part liquid epoxy resin composition that (i) is curable at temperatures equal to and lower than 120°C, (ii) has excellent adhesion to PBT or to an LCP and a metal terminal at high temperatures and high humidity and (iii) further has improved adhesion to a metal terminal at high temperatures in a solder reflow process, in a relay that is partially constituted by the PBT or LCP.

Note however that, since electrical components and electronic components have been reduced in size and increased in density in recent years, gaps to be bonded or to be sealed in the miniature control electronic components have been also dramatically reduced in size to approximately several tens of micrometers. Under such circumstances, in the above-mentioned one-part epoxy resin, a liquid epoxy resin and a solid curing agent may dissociate from each other in a gap of several tens of micrometers. If such a dissociation occurs, uncured liquid epoxy resin moves to an area to which no liquid epoxy resin should adhere, for example to a moving part or a contact part etc., and may cause a defect in characteristics.

For the purpose of solving such a problem, there has been disclosed a technique of suppressing dissociation of an epoxy resin and a curing agent by containing core-shell acrylic rubber fine particles in a one-part epoxy resin composition (for example, refer to Patent Literature 3).

Further, there has been disclosed a technique that allows a sealing agent to flow even into a small gap and to completely cure, by containing, as a curing agent for a one-part epoxy resin composition, a solid epoxy amine adduct and a solid aromatic urea compound (for example, refer to Patent Literature 4).

### Citation List

### Patent Literatures

Patent Literature 1
   Japanese Patent Application Publication, Tokukai, No. 2001-207029 A (Publication Date: July 31, 2001)
Patent Literature 2
   Japanese Patent Application Publication, Tokukai, No. 2007-39543 A (Publication Date: February 17, 2007)
Patent Literature 3
   Japanese Patent Application Publication, Tokukai, No. 2007-31526 A (Publication Date: February 8, 2007)
Patent Literature 4
   Japanese Patent Application Publication, Tokukai, No. 2001-220429 A (Publication Date: August 14, 2001)

### Summary of Invention

### Technical Problem

However, there has been a demand for a one-part epoxy resin composition that is capable of suppressing dissociation of an epoxy resin and a curing agent to an extent greater than that achieved by the configuration described in Patent Literature 3. Further, only limited kinds of curing agents can be used in the configuration shown in Patent Literature 4.

The present invention has been made in view of the above problem, and an object of the present invention is to achieve a one-part liquid epoxy resin composition (i) which is excellent in stability over long-term storage and in adhesion and (ii) in which a great variety of curing agents can be used and dissociation of an epoxy resin and a curing agent from each other is suppressed even when used in a gap of approximately several tens of micrometers.

### Solution to Problem

In order to attain the above object, the inventors of the present invention have diligently studied how to suppress dissociation of the epoxy resin and the curing agent.

The inventors of the present invention considered the evaluation method of Patent Literature 3 as follows. That is, according to the evaluation method described in Patent Literature 3, dissociation of the epoxy resin and the curing agent was evaluated by dropping a composition onto a slide glass, placing and fixing another slide glass on this slide glass, and thereafter curing the composition. This condition was different from actual use conditions of the one-part liquid epoxy resin composition. Therefore, even if a good result was obtained by this evaluation method, dissociation of an epoxy resin and a curing agent may occur in actual use.

In view of this, first, the inventors of the present invention analyzed the mechanism of how the dissociation occurs, by evaluating the dissociation of the epoxy resin and the curing agent under the conditions similar to actual use conditions.

Specifically, two glass plates were fixed at a given distance so that their surfaces faced each other. Such a pair of the glass plates was placed so that their surfaces were in parallel to the direction of gravitation force. An epoxy resin composition was dropped into a gap between the two glass plates, and thereafter was cured. Then, how the epoxy resin composition in the gap cured was observed.

The analysis showed that dissociation of the epoxy resin occurred mainly because the gap became clogged with a filler contained in the epoxy resin composition and this filler hindered the curing agent from entering the gap.

The inventors of the present invention have carried out further study based on the above finding, and have found that it is possible to suppress dissociation of the epoxy resin and the curing agent by limiting the particle size and content of the filler to predetermined levels. Then, the inventors of the present invention have completed the present invention.

That is, in order to attain the above object, an epoxy resin composition in accordance with the present invention is a one-part epoxy resin composition for hermetic sealing of an electronic component or an electrical component, containing: a liquid epoxy resin; dicyandiamide; and a filler, the filler having an average particle size between 0.1 µm and 1 µm, the filler containing particles not less than 5 µm in particle size in an amount of not more than 20 wt%, and the amount of the filler contained in the one-part epoxy resin composition being between 5 and 60 parts by weight relative to 100 parts by weight of the liquid epoxy resin.

The configuration makes a gap of approximately several tens of micrometers less likely to be clogged with the filler contained in the epoxy resin composition when the epoxy resin composition is used to seal the gap, and thus the curing agent becomes less hindered from entering into the gap. It is considered that this causes an increase in the amount of powder, such as the curing agent, flowing into the gap.

Accordingly, the configuration makes it possible to provide a one-part liquid epoxy resin composition (i) which is excellent in stability over long-term storage and in adhesion and (ii) in which a great variety of curing agents can be used and dissociation of an epoxy resin and a curing agent is suppressed even when used in a gap of approximately several tens of micrometers.

Further, since the above configuration contains dicyandiamide, it is possible to impart ductility to a resulting cured film. Further, since dicyandiamide is excellent in adhesion to metals, it is possible to provide an epoxy resin composition that is more excellent in adhesion.

In order to attain the above object, a component in accordance with the present invention is an electronic component or an electrical component, said component including at least two members bonded to each other with the foregoing one-part epoxy resin composition in accordance with the present invention.

According to the configuration, the members are bonded with the epoxy resin composition in accordance with the present invention. This makes it possible to provide a component that is excellent in stability over long-term storage and in adhesion.

Further, in order to attain the above object, a sealing method in accordance with the present invention is a sealing method including the step of sealing an electronic component or an electrical component by bonding at least two members with the foregoing one-part epoxy resin composition in accordance with the present invention.

Since the method includes the step of sealing with the epoxy resin composition in accordance with the present invention, the method achieves excellent stability over long-term storage and excellent adhesion and, in addition, makes it possible to use a great variety of curing agents and suppress dissociation of an epoxy resin and a curing agent even when used in a gap of approximately several tens of micrometers.

### Advantageous Effects of Invention

As described above, an epoxy resin composition in accordance with the present invention is configured such that the filler has an average particle size between 0.1 µm and 1 µm, the filler contains particles not less than 5 µm in particle size in an amount of not more than 20 wt%, and the amount of the filler contained in the one-part epoxy resin composition is between 5 and 60 parts by weight relative to 100 parts by weight of the liquid epoxy resin.

This makes it possible to provide a one-part liquid epoxy resin composition (i) which is excellent in stability over long-term storage and in adhesion and (ii) in which a great variety of curing agents can be used and dissociation of an epoxy resin and a curing agent is suppressed even when used in a gap of approximately several tens of micrometers. Further, since dicyandiamide is contained as the latent heat curing agent, stability under storage is secured.

Further, a component in accordance with the present invention is an electronic component or an electrical component, said component including at least two members bonded to each other with the foregoing one-part epoxy resin composition in accordance with the present invention.

This makes it possible to provide a component that is excellent in stability over long-term storage and in adhesion.

Moreover, a sealing method in accordance with the present invention is a sealing method including the step of sealing an electronic component or an electrical component by bonding at least two members with the foregoing one-part epoxy resin composition in accordance with the present invention.

This achieves excellent stability over long-term storage and excellent adhesion and, in addition, makes it possible to use a great variety of curing agents and suppress dissociation of an epoxy resin and a curing agent even when used in a gap of approximately several tens of micrometers.

### Description of Embodiments

The following description discusses the present invention in detail.

The particle size of each constituent given in this description is measured with use of a particle size distribution analyzer (product name: LA920, produced by HORIBA, Ltd.) based on the principle of laser diffraction scattering (D50), unless otherwise noted. Further, unless otherwise noted, the other physical properties are measured by the methods described in Examples (described layer). Moreover, unless otherwise noted, the phrase "between A and B" representing a range in this description means not less than A but not more than B.

### (I) Epoxy resin composition

An epoxy resin composition in accordance with the present embodiment is a one-part epoxy resin composition for hermetic sealing of an electronic component or an electrical component, and contains a liquid epoxy resin, dicyandiamide and a filler. The epoxy resin composition in accordance with the present embodiment is configured such that the filler has an average particle size between 0.1 µm and 1 µm, the filler contains particles not less than 5 µm in particle size in an amount of not more than 20 wt%, and the amount of the filler contained is between 5 and 60 parts by weight relative to 100 parts by weight of the liquid epoxy resin.

This configuration makes it possible to achieve a one-part liquid epoxy resin composition (i) which is excellent in stability over long-term storage and in adhesion and (ii) in which dissociation of an epoxy resin and a curing agent is suppressed even when used in a gap of approximately several tens of micrometers.

The stability over long-term storage means stability of constituents and characteristics of the epoxy resin composition when the epoxy resin composition is stored for a certain period of time at various temperatures and humidity levels. In particular, generally, there is concern that a one-part epoxy resin composition undergoes a curing reaction and thus increases in viscosity during storage.

Further, the adhesion means an ability to join two surfaces together chemically and/or physically via the epoxy resin composition.

According to the present embodiment, the "electronic component or the electrical component" is for example a relay, a switch or a sensor etc. The epoxy resin composition is capable of being used to seal a gap of preferably several tens of micrometers, more preferably a gap between 10 µm to 50 µm in size, and further preferably a gap between 10 µm to 20 µm in size.

Further, the epoxy resin composition in accordance with the present embodiment preferably contains a latent heat curing accelerator.

The following description discusses each constituent.

### Liquid epoxy resin

[1] A liquid epoxy resin is an epoxy resin that is in liquid form at around room temperature (e.g., 25°C). Various epoxy resins for use in a generally known one-part epoxy resin composition can be used as the liquid epoxy resin. The epoxy resin is for example a compound in which two or more epoxy groups are bonded to ends of an aromatic ring or a hydrogenated aromatic ring such as a benzene ring, a naphthalene ring or a hydrogenated benzene ring.

Note here that the aromatic ring and the hydrogenated aromatic ring may have a substituent such as alkyl or halogen bonded thereto. Further, the aromatic ring and/or the hydrogenated aromatic ring may be bonded to the epoxy groups via oxyalkylene, poly(oxyalkylene), carbooxyalkylene, carbopoly(oxyalkylene), aminoalkylene or the like.

Further, in a case where the compound has a plurality of the aromatic ring(s) and/or the hydrogenated aromatic ring(s), the plurality of the aromatic ring(s) and/or the hydrogenated aromatic ring(s) may be bonded to each other either directly or via an alkylene group, an oxyalkylene group, a poly(oxyalkylene) group or the like.

Specific examples of the liquid epoxy resin include: bisphenol A diglycidyl ether, bisphenol F diglycidyl ether, bisphenol A ethyleneoxide 2 moles adduct diglycidyl ether, bisphenol A-1,2-propylene oxide 2 moles adduct diglycidyl ether, hydrogenated bisphenol A diglycidyl ether, hydrogenated bisphenol F diglycidyl ether, orthophthalic acid diglycidyl ester, tetrahydro isophthalic acid diglycidyl ester, N,N-diglycidyl aniline, N,N-diglycidyl toluidine, N,N-diglycidyl aniline-3-glycidyl ether, tetraglycidyl meta-xylenediamine, 1,3-bis(N,N-diglycidyl aminomethylene) cyclohexane, and tetrabromobisphenol A diglycidyl ether. These liquid epoxy resins can be used solely or two or more liquid epoxy resins can be used in combination.

According to the epoxy resin composition in accordance with the present embodiment, the epoxy resin is preferably bisphenol A diglycidyl ether, hydrogenated bisphenol A diglycidyl ether, bisphenol F diglycidyl ether, or hydrogenated bisphenol F diglycidyl ether, because of their excellent heat resistance after being cured.

The amount of the epoxy resin contained in the epoxy resin composition can be changed as appropriate according to the purpose of the usage. For example, the epoxy resin can be contained in an amount between 50 wt% and 85 wt%.

### Latent heat curing agent

[2] The epoxy resin composition in accordance with the present embodiment contains dicyandiamide serving as a latent heat curing agent. Dicyandiamide is capable of imparting ductility to a resulting cured film and increasing a binding force between the epoxy resin composition and a metal constituting an electrical component.

A latent heat curing agent other than dicyandiamide is for example a generally known curing agent that is in solid form at around room temperature (e.g., 25°C) and allows the epoxy resin to cure through a reaction with the epoxy resin. Specific examples of such a latent heat curing agent other than dicyandiamide include: dicarboxylic anhydride, tricarboxylic anhydride, and tetracarboxylic anhydride described in Japanese Patent Application Publication, Tokukai, No. 2001-220429 A.

The ductility is toughness of a material, and means the capacity of the material resistant to cracking and extension of cracking.

The average particle size of dicyandiamide is preferably not more than 10 µm, and more preferably not more than 5 µm. Further, the lower limit of the average particle size is preferably 0.1 µm. In a case where the average particle size is no less than 0.1 µm, it is possible to suppress an increase in thixotropy, and thus possible to prevent handleability from decreasing due to raised viscosity.

The amount of dicyandiamide contained in the epoxy resin composition can be changed as appropriate according to the purpose of the usage. For example, dicyandiamide can be contained in an amount between 5 wt% and 20 wt% relative to 100 parts by weight of the epoxy resin.

### Latent heat curing accelerator

[3] The latent heat curing accelerator is a curing agent that is stable in a system in which it is mixed with the epoxy resin, and is a compound that (i) has no activity to cure the epoxy resin at room temperature and (ii) becomes active when dissolved, decomposed, or undergoes a transfer reaction etc. by heat, thereby accelerating curing of the epoxy resin. That is, the latent heat curing accelerator is an agent that allows an epoxy resin to cure at lower temperatures and to cure within a shorter period of time.

In particular, the present embodiment uses dicyandiamide having a high melting point (approximately between 180°C and 200°C). Therefore, the latent heat curing accelerator can be used in combination with dicyandiamide in order to allow the epoxy resin to cure at a temperature of as low as 120°C or lower as required in the production of an electronic component such as a miniature control electronic component.

The epoxy resin composition in accordance with the present embodiment is preferably prepared so that it will cure when heated at a temperature between 80°C and 120°C.

The latent heat curing accelerator used here is for example selected from various generally-known latent heat curing accelerators described in Japanese Patent Application Publication, Tokukai, No. 2001-220429 A. Specific examples of the latent heat curing accelerator include epoxy resin amine adduct compounds, modified aliphatic amine compounds, imidazole compounds, urea derivatives, and tertiary amines. These may be used solely or two or more of them may be used in combination.

Since basically the latent heat curing accelerator melts at a temperature lower than the curing temperature, the average particle size of the latent heat curing accelerator is not particularly limited; however, is preferably not greater than 10 µm, and more preferably not greater than 5 µm.

The amount of the latent heat curing accelerator contained in the epoxy resin composition can be changed as appropriate according to the purpose of the usage. For example, the latent heat curing accelerator can be contained in an amount between 2 wt% and 30 wt%.

### Filler

[4] The epoxy resin composition in accordance with the present invention has been made on the basis of such a finding by the inventors of the present invention that the reason why dissociation of a liquid epoxy resin and a solid curing agent occurs in a gap of approximately several tens of micrometers is that the amount of solids such as a filler and the curing agent flow into the gap is not sufficient.

That is, the epoxy resin composition in accordance with the present invention suppresses, by limiting the average particle size of the filler to between 0.1 µm and 1 µm, dissociation of the epoxy resin and the curing agent occurring when the epoxy resin composition is in use.

The phrase "the average particle size of the filler is between 0.1 µm and 1 µm" means (i) the average particle size at a peak of a particle size distribution of the filler in the epoxy resin composition if there is only one peak in the particle size distribution or (ii) the average particle size at the highest peak representing the largest amount if there are two or more peaks in the particle size distribution.

Note here that, if the average particle size of the filler is greater than 1 µm, filler particles become difficult to enter a gap. On the other hand, if the average particle size is less than 0.1 µm, the epoxy resin composition is practically unfavorable because the epoxy resin composition may increase in viscosity, the amount of the epoxy resin composition supplied from a needle may decrease, speed at which the epoxy resin composition is applied may decrease, and thus there may be a reduction in productivity.

The average particle size of the filler is between 0.1 µm and 1 µm, and more preferably between 0.5 µm and 0.9 µm. Further, the filler contains particles not less than 5 µm in particle size in an amount of not more than 20 wt%.

Further, the percentage of the largest amount represented by the highest peak, which determines the average particle size, is preferably not less than 80 wt%, more preferably not less than 90 wt%, and most preferably 100 wt%. That is, it is most preferable that the number of the peak be only one (1).

It is considered that, if the filler contains particles not less than 5 µm in particle size in an amount of more than 20 wt%, the filler particles become difficult to enter a small gap, the gap becomes clogged with the particles, and such a clogging hinders the curing agent from entering the gap. As a result, the filler particles and the curing agent are stopped from entering the gap and thus the epoxy resin alone flows into the gap. This results in dissociation of an uncured component.

Specific examples of the filler include inorganic fillers and thermal expansion fillers. Only an inorganic filler(s) may be used, only a thermal expansion filler(s) may be used, or an inorganic filler(s) and a thermal expansion filler(s) may be used in combination.

Specific examples of the inorganic filler include calcium carbonate, fused silica, crystalline silica, alumina, titanium oxide, silica titania, boron nitride, aluminum nitride, silicon nitride, magnesia, magnesium silicate, talc, and mica. These inorganic fillers may be used solely or two or more inorganic fillers may be used in combination. Out of these, it is preferable that silica, alumina or talc be used solely or two or more of these be used in combination.

Specific examples of the thermal expansion filler include: acrylic-epoxy copolymers (copolymer of acrylic acids and monomers having an epoxy group and an unsaturated group); core-shell acrylic resin (e.g., "ZEFIAC F351" (product name, produced by Ganz Chemical Co., LTD.) etc.); methacrylic resin (e.g., "JF001" (product name, produced by Mitsubishi Rayon Co., Ltd.), "JF003" (product name, produced by Mitsubishi Rayon Co., Ltd.) etc.); organic bentonite (e.g., "ESBEN NZ" (product name, produced by HOJUN), "ESBEN NX" (product name, produced by HOJUN) etc.); and acrylonitrile plastic balloon (core-shell particles each of which is constituted by (i) a thermoplastic resin serving as a shell and (ii) a hydrocarbon having a low boiling point, which hydrocarbon serves as a core and is enclosed by the shell) (e.g., "Matsumoto Microsphere F" (product name, produced by Matsumoto Yushi-Seiyaku Co., Ltd.) etc.). These thermal expansion fillers may be used solely or two or more thermal expansion fillers may be used in combination.

The thermal expansion filler means a filler that increases in its volume when heated at a certain temperature. It is considered that, by containing the thermal expansion filler, thermal expansion filler particles expand when heated and increase the viscosity of the epoxy resin composition, thereby suppressing an uncured epoxy resin flowing out of a gap. This suppresses dissociation of the epoxy resin and the curing agent.

The thermal expansion filler is preferably a filler whose particle size at a temperature between 100°C and 150°C is at least twice as large as its particle size at a temperature between 20°C and 40°C. Such a filler is for example an acrylic-epoxy copolymer etc. The thermal expansion filler particles having the above thermal expansion coefficient significantly change in volume. Therefore, it is possible to sufficiently suppress an uncured epoxy resin flowing out of a gap.

The total amount of the filler contained is between 5 and 60 parts by weight relative to 100 parts by weight of the epoxy resin.

In a case where the filler used is a combination of an inorganic filler and a thermal expansion filler, the total amount of the inorganic filler and the thermal expansion filler contained is between 5 and 60 parts by weight relative to 100 pars by weight of the epoxy resin, and the amount of the thermal expansion filler is preferably not less than 5 parts by weight but less than 60 parts by weight relative to 100 parts by weight of the epoxy resin.

### Other constituent

[5] The epoxy resin composition in accordance with the present embodiment may contain a constituent(s) other than the above-mentioned constituents. Examples of such a constituent include various additives that can be contained in a generally known epoxy resin composition, such as a thixotropy-imparting agent, flame retardant, photostabilizer, viscosity regulator, and coloring agent.

Examples of the thixotropy-imparting agent include inorganic fillers such as silica, calcium carbonate, and alumina. In this description, the thixotropy-imparting agent is intended to be the one having a particle size between 0.01 µm and 0.09 µm, further preferably between 0.02 µm and 0.05 µm.

As described earlier, the epoxy resin composition in accordance with the present invention is preferably configured such that the dicyandiamide has an average particle size of not more than 10 µm.

The configuration makes it possible to provide a one-part liquid epoxy resin composition in which dissociation of an epoxy resin and a curing agent when in use is further suppressed.

It is preferable that the epoxy resin composition in accordance with the present invention further contain a latent heat curing accelerator.

The configuration makes it possible to allow the epoxy resin to cure at lower temperatures, and thus possible to cause the epoxy resin to cure within a shorter period of time.

Further, the epoxy resin composition in accordance with the present invention is preferably configured such that the filler is an inorganic filler.

It is preferable that the epoxy resin composition in accordance with the present invention further contain a thermal expansion filler which serves as another filler.

Further, the epoxy resin composition in accordance with the present invention is preferably configured such that the filler is a thermal expansion filler.

It is considered that the above configurations containing the thermal expansion filler achieve the following. That is, the thermal expansion filler having entered a gap expands and closes the gap when the epoxy resin composition is cured by heating, and thus a powder component is prevented from agglomerating in the gap to form an island structure when the epoxy resin composition is cured by heating. It is considered that this suppresses dissociation of the epoxy resin and the curing agent in the gap. Accordingly, it is possible to provide a one-part liquid epoxy resin composition in which dissociation of the epoxy resin and the curing agent when in use is further suppressed.

The epoxy resin composition in accordance with the present invention is preferably configured such that the amount of the thermal expansion filler contained in the one-part epoxy resin composition is not less than 5 parts by weight but less than 60 parts by weight, relative to 100 parts by weight of the liquid epoxy resin.

The epoxy resin composition in accordance with the present invention is preferably configured such that the particle size of the thermal expansion filler at a temperature between 100°C and 150°C is at least twice as large as the particle size of the thermal expansion filler at a temperature between 20°C and 40°C.

According to the configuration, the thermal expansion filler having entered a gap significantly expands when the epoxy resin composition is cured by heating. This further ensures that the dissociation of the epoxy resin and the curing agent in the gap is suppressed. Accordingly, it is possible to provide a one-part liquid epoxy resin composition in which dissociation of the epoxy resin and the curing agent when in use is further suppressed.

### (II) Component

A component in accordance with the present embodiment is an electronic component or an electrical component, which includes at least two members bonded to each other with the foregoing epoxy resin composition.

The "electronic component or the electrical component" is not particularly limited provided that it benefits from hermetic sealing or insulative sealing, and may be the one usually called an "electrical component". For example, the "electronic component or the electrical component" is a relay, a switch or a sensor etc., and is preferably a relay.

Further, the phrase "at least two members bonded to each other with the epoxy resin composition" means that a one-part epoxy resin composition lies between at least two members, and the at least two members are bonded to each other by the adhesion force of the one-part epoxy resin composition.

The members to be bonded are not particularly limited. For example, a molding material and a metal terminal of a relay may be bonded with the one-part epoxy resin composition.

### (III) Sealing method

A sealing method in accordance with the present embodiment includes the step of sealing an electronic component or an electrical component by bonding at least two members with the foregoing one-part epoxy resin composition.

The step can be carried out in accordance with a generally known method, except that the foregoing epoxy resin composition is used.

### Examples

The following description discusses, with reference to Examples, the present invention in more detail. Note, however, that the present invention is not limited to the following Examples.

### [How to measure average particle size]

The average particle size of a filler was calculated from a value obtained by measurement with use of a particle size distribution analyzer (product name: LA920, produced by HORIBA, Ltd.) based on the principle of laser diffraction scattering (D50). Specifically, an average particle size was found for each peak in a measured particle size distribution, and the average particle size at the highest peak of the largest amount was used as the "average particle size of the filler".

The amount of each peak was determined by the area of each peak in a histogram. Note here that, in a case where a plurality of peaks overlap, a method can be employed by which to (i) carry out fitting of each peak with a corresponding suitable function (Lorenz function or Gaussian function) and (ii) taking a difference between the peaks at an optimum ratio. More specifically, it is possible to carry out the calculation with use of software that accompanies the particle size distribution analyzer or general spreadsheet software (e.g., Excel, IGOR, Mathmatica (these are product names)).

### [Percentage of particles not less than 5 µm in particle size]

The percentage of particles not less than 5 µm in particle size was calculated from a value obtained by measurement with use of a particle size distribution analyzer (product name: LA920, produced by HORIBA, Ltd.) based on the principle of laser diffraction scattering (D50).

### [Check for dissociation of uncured component]

A prepared epoxy resin composition was tested for dissociation of an uncured component in the following manner. Two glass plates were fixed at a given distance so that their surfaces faced each other. Such a pair of the glass plates was placed so that their surfaces were in parallel to the direction of gravitation force. The epoxy resin composition was dropped into a gap between the two glass plates, and thereafter was allowed to stand at room temperature. Then, how the epoxy resin composition in a region between the two glass plates behaved was observed visually. In this way, whether there was an uncured component was determined based on whether there was an uncured epoxy resin.

Specifically, the visual observation above was carried out in the following manner. First, whether or not a transparent portion was dissociated from the epoxy resin composition in a region between the two glass plates was checked. Then, if no transparent portion was dissociated, then it was determined that no uncured component was dissociated (Very good).

On the other hand, if a transparent portion was dissociated, the two glass plates were pulled apart, and the transparent portion was touched with tweezers to check for curing. If the transparent portion was cured, then it was determined that no uncured component was dissociated (Very good). If the transparent portion was in gel form, then it was determined to be (Good). If the transparent portion was in liquid form, then it was determined that an uncured component was dissociated (Poor).

The gap between the two glass plates was controlled by sandwiching, between the two glass plates, a thickness gage having a thickness of the size shown in Table 5.

### Example 1

100 parts by weight of liquid bisphenol A diglycidyl ether, 7 parts by weight of dicyandiamide serving as a curing agent, 10 parts by weight of an epoxy resin adduct compound of 2-ethyl-4-methylimidazole (product name: PN-23, produced by Ajinomoto Fine-Techno Co., Inc.) serving as a latent heat curing agent, 50 parts by weight of calcium carbonate (product name: KALTEX5, produced by MARUO CALCIUM CO., LTD) serving as an inorganic filler and having a particle size of 0.9 µm, 1 part by weight of calcium carbonate fine particles (product name: product name: K-N-40, produced by MARUO CALCIUM CO., LTD) serving as a thixotropy-imparting agent (thixotropy-imparting agent), and 1 part by weight of carbon black (product name: #40, produced by Mitsubishi Chemical Corporation) serving as a coloring agent were mixed, and thereafter the mixture was kneaded with use of a mixing roll. In this way, a one-part

epoxy resin composition was prepared. The one-part epoxy resin composition thus obtained was checked for dissociation of an uncured component. The results and checking conditions are shown in Table 5.

### Examples 2 to 15

The same operations as in Example 1 were repeated expect that the constituents to be mixed and the amounts thereof were those shown in Tables 1 and 2. In this way, respective one-part epoxy resin compositions were prepared. The one-part epoxy resin compositions thus obtained were checked for dissociation of an uncured component. The results and checking conditions are shown in Table 5.

Note that an acrylic-epoxy copolymer (product name: F351, produced by Ganz Chemical Co., LTD.), which is an expansion filler used in the Examples and Comparative Examples (described later), is such that the particle size at a temperature between 100°C and 150°C is at least twice as large as the particle size at a temperature between 20°C and 40°C. This can be confirmed by observing the acrylic-epoxy copolymer under an electron microscope or a metallurgical microscope etc.

Further, calcium carbonates serving as inorganic fillers used in the Examples and Comparative Examples (described later), which calcium carbonates had particle sizes of 0.05 µm, 0.15 µm, 2 µm and 11 µm, respectively, were KALFAIN 200 (product name, produced by MARUO CALCIUM CO., LTD), MSK-PO (product name, produced by MARUO CALCIUM CO., LTD), NS-100 (product name, produced by NITTO FUNKA K.K.), and Jutan (product name, produced by MARUO CALCIUM CO., LTD), respectively. Further, alumina used was AKP-3000 (product name, produced by Sumitomo Chemical Co., Ltd.), and silica used was SPM-30M (product name, produced by DENKI KAGAKU KOGYO KABUSHIKI KAISHA).

**[Table 1]**

| Constituents | | | Mixed Amount (parts by weight) | | | | | | |
|---|---|---|---|---|---|---|---|---|---|
| Name | | Particle Size (µm) | Example 1 | Example 2 | Example 3 | Example 4 | Example 5 | Example 6 | Example 7 |
| Epoxy Resin | Bisphenol A diglycidyl ether | - | 100 | 100 | 100 | 100 | 100 | 100 | 100 |
| Curing Agent | Dicyandiamide | 5 | 7 | 7 | 7 | 7 | 7 | 7 | 7 |
| | | 10 | | | | | | | |
| Curing Accelerator | Epoxy resin amine adduct | | 10 | 10 | 10 | 10 | 10 | 10 | 10 |
| Inorganic Filler | Calcium Carbonate | 0.05 | | | | | | | |
| | | 0.15 | | | | | | | |
| | | 0.9 | 50 | 50 | 10 | 40 | 60 | 42.5 | 47.5 |
| | | 2 | | | | | | | |
| | | 11 | | | | | | 7.5 | 2.5 |
| | Alumina | 0.6 | | | | | | | |
| | Silica | 0.9 | | | | | | | |
| Thermal expansion filler | Acrylic-epoxy copolymer | 0.5 | | | | | | | |
| Thixotropy-imparting agent | Calcium Carbonate | | 1 | 1 | 1 | 1 | 1 | 1 | 1 |
| Coloring Agent | Carbon Black | | 1 | 1 | 1 | 1 | 1 | 1 | 1 |

**[Table 2]**

| Constituents | | | Mixed Amount (parts by weight) | | | | | | | |
|---|---|---|---|---|---|---|---|---|---|---|
| Name | | Particle Size (µm) | Example 8 | Example 9 | Example 10 | Example 11 | Example 12 | Example 13 | Example 14 | Example 15 |
| Epoxy Resin | Bisphenol A diglycidyl ether | - | 100 | 100 | 100 | 100 | 100 | 100 | 100 | 100 |
| Curing Agent | Dicyandiamide | 5 | 7 | 7 | 7 | 7 | 7 | 7 | | 7 |
| | | 10 | | | | | | | 7 | |
| Curing Accelerator | Epoxy resin amine adduct | | 10 | 10 | 10 | 10 | 10 | 10 | 10 | 10 |
| Inorganic Filler | Calcium Carbonate | 0.05 | | | | | | | | |
| | | 0.15 | | | | | | | | |
| | | 0.9 | | | 5 | 30 | | | 50 | 40 |
| | | 2 | | | | | | | | |
| | | 11 | | | | | | | | |
| | Alumina | 0.6 | | | | | 50 | | | |
| | Silica | 0.9 | | | | | | 50 | | |
| Thermal expansion filler | Acrylic-epoxy copolymer | 0.5 | 5 | 60 | 5 | 30 | | | | 10 |
| Thixotropy-imparting agent | Calcium Carbonate | | 1 | 1 | 1 | 1 | 1 | 1 | 1 | 1 |
| Coloring Agent | Carbon Black | | 1 | 1 | 1 | 1 | 1 | 1 | 1 | 1 |

### Comparative Examples 1 to 13

The same operations as in Example 1 were repeated expect that the constituents to be mixed and the amounts thereof were those shown in Tables 3 and 4. In this way, respective one-part epoxy resin compositions were prepared. The one-part epoxy resin compositions thus obtained were checked for dissociation of an uncured component. The results and checking conditions are shown in Table 5.

**[Table 3]**

| Constituents | | | Mixed Amount (parts by weight) | | | | | | |
|---|---|---|---|---|---|---|---|---|---|
| Name | | Particle Size (µm) | Comparative Example 1 | Comparative Example 2 | Comparative Example 3 | Comparative Example 4 | Comparative Example 5 | Comparative Example 6 | Comparative Example 7 |
| Epoxy Resin | Bisphenol A diglycidyl ether | - | 100 | 100 | 100 | 100 | 100 | 100 | 100 |
| Curing Agent | Dicyandiamide | 5 | 7 | 7 | 7 | 7 | 7 | 7 | 7 |
| | | 10 | | | | | | | |
| Curing Accelerator | Epoxy resin amine adduct | | 10 | 10 | 10 | 10 | 10 | 10 | 10 |
| Inorganic Filler | Calcium Carbonate | 0.05 | 50 | | | | | | |
| | | 0.15 | | | | | | | |
| | | 0.9 | | | | 3 | 70 | 37.5 | 25 |
| | | 2 | | 50 | | | | | |
| | | 11 | | | 50 | | | 12.5 | 25 |
| | Alumina | 0.6 | | | | | | | |
| | Silica | 0.9 | | | | | | | |
| Thermal expansion filler | Acrylic-epoxy copolymer | 0.5 | | | | | | | |
| Thixotropy -imparting agent | Calcium Carbonate | | 1 | 1 | 1 | 1 | 1 | 1 | 1 |
| Coloring Agent | Carbon Black | | 1 | 1 | 1 | 1 | 1 | 1 | 1 |

**[Table 4]**

| Constituents | | | Mixed Amount (parts by weight) | | | | |
|---|---|---|---|---|---|---|---|
| Name | | Particle Size (µm) | Comparative Example 8 | Comparative Example 9 | Comparative Example 10 | Comparative Example 11 | Comparative Example 12 |
| Epoxy Resin | Bisphenol A diglycidyl ether | - | 100 | 100 | 100 | 100 | 100 |
| Curing Agent | Dicyandiamide | 5 | 7 | 7 | 7 | 7 | 7 |
| | | 10 | | | | | |
| Curing Accelerator | Epoxy resin amine adduct | | 10 | 10 | 10 | 10 | 10 |
| Inorganic Filler | Calcium Carbonate | 0.05 | | | | | |
| | | 0.15 | | | | | |
| | | 0.9 | | | 2 | 40 | |
| | | 2 | | | | | |
| | | 11 | | | | | |
| | Alumina | 0.6 | | | | | |
| | Silica | 0.9 | | | | | |
| Thermal expansion filler | Acrylic-epoxy copolymer | 0.5 | 3 | 70 | 1 | 30 | |
| Thixotropy-imparting agent | Calcium Carbonate | | 1 | 1 | 1 | 1 | 1 |
| Coloring Agent | Carbon Black | | 1 | 1 | 1 | 1 | 1 |

**[Table 5] (continued on the next page)**

| | Filler | | | | | Dicyandiamide | Plates | | Dissociation of Uncured Component |
|---|---|---|---|---|---|---|---|---|---|
| | Average Particle Size (µm) | Percentage of particles not less than 5 µm in size (wt%) | Amount*1 of Inorganic Filler (wt%) | Amount*1 of Thermal expansion filler (wt%) | Total Amount*1 of Filler (wt%) | Average Particle Size (µm) | Size of Gap (µm) | Material | |
| Example 1 | 0.15 | 0 | 50 | 0 | 50 | 5 | 20 | Glass/ Glass | None (Very Good) |
| Example 2 | 0.9 | 0 | 50 | 0 | 50 | 5 | 20 | Glass/ Glass | None (Very Good) |
| Example 3 | 0.9 | 0 | 10 | 0 | 10 | 5 | 20 | Glass/ Glass | None (Very Good) |
| Example 4 | 0.9 | 0 | 40 | 0 | 40 | 5 | 20 | Glass/ Glass | None (Very Good) |
| Example 5 | 0.9 | 0 | 60 | 0 | 60 | 5 | 20 | Glass/ Glass | None (Very Good) |
| Example 6 | 0.9 | 15 | 50 | 0 | 50 | 5 | 10 | Glass/ Glass | None (Very Good) |
| Example 7 | 0.9 | 5 | 50 | 0 | 50 | 5 | 10 | Glass/ Glass | None (Very Good) |
| Example 8 | 0.5 | 0 | 0 | 5 | 5 | 5 | 20 | Glass/ Glass | None (Very Good) |
| Example 9 | 0.5 | 0 | 0 | 60 | 60 | 5 | 20 | Glass/ Glass | None (Very Good) |
| Example 10 | 0.9, 0.5 | 0 | 5 | 5 | 10 | 5 | 20 | Glass/ Glass | None (Very Good) |
| Example 11 | 0.9, 0.5 | 0 | 30 | 30 | 60 | 5 | 20 | Glass/ Glass | None (Very Good) |
| Example 12 | 0.6 | 0 | 50 | 0 | 50 | 5 | 20 | Glass/ Glass | None (Very Good) |
| Example 13 | 0.9 | 0 | 50 | 0 | 50 | 5 | 20 | Glass/ Glass | None (Very Good) |
| Example 14 | 0.15 | 0 | 50 | 0 | 50 | 10 | 20 | Glass/ Glass | Almost None (Good) |
| Example 15 | 0.9 | 0 | 40 | 10 | 50 | 5 | 20 | LCP/L CP*2 | None (Very Good) |
| Comparative Example 1 | 0.05 | 0 | 50 | 0 | 50 | 5 | 20 | Glass/ Glass | Yes (Poor) |
| Comparative Example 2 | 2 | 0 | 50 | 0 | 50 | 5 | 20 | Glass/ Glass | Yes (Poor) |
| Comparative Example 3 | 11 | 100 | 50 | 0 | 50 | 5 | 20 | Glass/ Glass | Yes (Poor) |
| Comparative Example 4 | 0.9 | 0 | 3 | 0 | 3 | 5 | 20 | Glass/ Glass | Yes (Poor) |
| Comparative Example 5 | 0.9 | 0 | 70 | 0 | 70 | 5 | 20 | Glass/ Glass | Yes (Poor) |
| Comparative Example 6 | 0.9 | 25 | 50 | 0 | 55 | 5 | 20 | Glass/ Glass | Yes (Poor) |
| Comparative Example 7 | 0.9, 11 | 50 | 50 | 0 | 50 | 5 | 20 | Glass/ Glass | Yes (Poor) |
| Comparative Example 8 | 0.5 | 0 | 0 | 3 | 3 | 5 | 20 | Glass/ Glass | Yes (Poor) |
| Comparative Example 9 | 0.5 | 0 | 0 | 70 | 70 | 5 | 20 | Glass/ Glass | Yes (Poor) |
| Comparative Example 10 | 0.9 | 0 | 2 | 1 | 3 | 5 | 20 | Glass/ Glass | Yes (Poor) |
| Comparative Example 11 | 0.9 | 0 | 40 | 30 | 70 | 5 | 20 | Glass/ Glass | Yes (Poor) |
| Comparative Example 12 | - | - | 0 | 0 | 0 | 5 | 20 | Glass/ Glass | Yes (Poor) |

| | | | | | | | | | |
|---|---|---|---|---|---|---|---|---|---|
| *1) The amount means the weight percentage relative to the epoxy resin. *2) In Example 15, the checking for dissociation of an uncured component was carried out with use of liquid crystal polymers (product name: Sumika Super, produced by Sumitomo Chemical Co., Ltd.) (described as LCP in Table) instead of the glass plates. | | | | | | | | | |

The present invention is not limited to the descriptions of the respective embodiments, but may be altered within the scope of the claims. An embodiment derived from a proper combination of technical means disclosed in different embodiments is encompassed in the technical scope of the invention.

### Industrial Applicability

An epoxy resin composition of the present invention is suitably applicable to hermetic sealing or insulative sealing of a gap in various electronic components and electrical components such as a relay, a switch and a sensor.

## Claims

1. A one-part epoxy resin composition for hermetic sealing of an electronic component or an electrical component, comprising:
a liquid epoxy resin;
dicyandiamide; and
a filler,
the filler having an average particle size between 0.1 µm and 1 µm,
the filler containing particles not less than 5 µm in particle size in an amount of not more than 20 wt%, and
the amount of the filler contained in the one-part epoxy resin composition being between 5 and 60 parts by weight relative to 100 parts by weight of the liquid epoxy resin.

2. The one-part epoxy resin composition according to claim 1, wherein the dicyandiamide has an average particle size of not more than 10 µm.

3. The one-part epoxy resin composition according to claim 1, further comprising a latent heat curing accelerator.

4. The one-part epoxy resin composition according to claim 1, wherein the filler is an inorganic filler.

5. The one-part epoxy resin composition according to claim 1, wherein the filler is a thermal expansion filler.

6. The one-part epoxy resin composition according to claim 4, further comprising a thermal expansion filler which serves as another filler.

7. The one-part epoxy resin composition according to claim 6, wherein the amount of the thermal expansion filler contained in the one-part epoxy resin composition is not less than 5 parts by weight but less than 60 parts by weight, relative to 100 parts by weight of the liquid epoxy resin.

8. The one-part epoxy resin composition according to claim 5, wherein the particle size of the thermal expansion filler at a temperature between 100°C and 150°C is at least twice as large as the particle size of the thermal expansion filler at a temperature between 20°C and 40°C.

9. A component which is an electronic component or an electrical component,
said component comprising at least two members bonded to each other with a one-part epoxy resin composition recited in claim 1.

10. A sealing method comprising the step of sealing an electronic component or an electrical component by bonding at least two members with a one-part epoxy resin composition recited in claim 1.
